Europäisches Patentamt

European Patent Office

Office européen des brevets

(11) Numéro de publication: **0 093 675**
**B1**

(12) **FASCICULE DE BREVET EUROPEEN**

(45) Date de publication du fascicule du brevet: **20.07.88**

(51) Int. Cl.⁴: **G 01 G 11/00**

(21) Numéro de dépôt: **83400901.1**

(22) Date de dépôt: **04.05.83**

(54) **Elément de pesage transporteur incorporé à une chaîne de préemballage.**

(30) Priorité: **04.05.82 FR 8207726**

(43) Date de publication de la demande:
**09.11.83 Bulletin 83/45**

(45) Mention de la délivrance du brevet:
**20.07.88 Bulletin 88/29**

(84) Etats contractants désignés:
**BE CH DE IT LI NL**

(56) Documents cités:
**FR-A-1 242 035**
**US-A-1 885 378**
**US-A-2 541 610**
**US-A-2 600 966**
**US-A-3 070 214**

(73) Titulaire: **LUTRANA Société Anonyme :**
**68 avenue Gambetta**
**F-93171 Bagnolet (FR)**

(72) Inventeur: **Balourdet, René**
**70 rue Roger Alboy**
**F-93220 Gagny (FR)**

(74) Mandataire: **Chevallier, Robert Marie Georges**
**Cabinet BOETTCHER 23, rue La Boétie**
**F-75008 Paris (FR)**

EP 0 093 675 B1

Courier Press, Leamington Spa, England.

## Description

L'invention a pour objet un élément de pesage pour transporteur qui est incorporé à une chaîne de préemballage afin de peser des articles qui viennent d'être préemballés et qui sont déplacés par un transporteur entre des postes de préemballage situés en amont et un poste d'emballage et d'expédition situé en aval.

Les articles préemballés — par exemple des morceaux de viande déposés chacun sur une barquette et enveloppés ensuite d'une feuille transparente scellée à la chaleur — sont entraînés les uns derrière les autres par le transporteur avec une faible distance les séparant.

On connaît déjà dans le commerce des installations de ce type. L'élément de pesage est un élément transporteur à courroie sans fin tendue entre deux cylindres parallèles dont l'une est un cylindre moteur qui est accouplé à l'arbre de sortie d'un groupe motoréducteur. Cet élément de pesage a une longueur juste limitée aux besoins et il est disposé entre deux transporteurs classiques en prolongement l'un de l'autre, au niveau voulu pour que la continuité du déplacement soit assurée dans un plan horizontal.

L'élément de pesage est supporté comme il convient par le plateau d'une balance d'un type quelconque, approprié. De préférence cette dernière est de type électronique avec un dispositif d'impression d'un ticket qui porte des renseignements utiles: le poids net de l'article pesé, le prix à l'unité du produit et le prix de l'article.

De façon classique, dans les installations connues, l'élément de pesage supporté par la balance est un ensemble complet autonome; autrement dit, le groupe motoréducteur fait partie de la structure de l'ensemble. Son poids fait partie du poids de l'élément de pesage. On a ainsi l'assurance que la tare, ou poids mort, dudit élément est parfaitement connue et qu'il en est bien tenu compte dans les pesées. Ces dernières doivent satisfaire à une condition assez rigoureuse selon laquelle le poids doit être déterminé avec une erreur au plus égale à 2 g.

Pour parvenir à cette précision, on est contraint d'arrêter le fonctionnement du groupe motoréducteur qui entraîne les courroies transporteuses de l'élément de pesage chaque fois qu'un article à peser est arrivé sur ce dernier; la pesée est effectuée pendant l'arrêt. Dès qu'elle est terminée, le groupe et les courroies transporteuses sont remis en marche, l'article est évacué sur le transporteur aval et un nouvel article à peser arrive par le transporteur amont.

L'arrêt du groupe motoréducteur pendant chaque pesée est nécessaire parce que le fonctionnement impose à la balance des vibrations telles que la précision souhaitée ne serait pas atteinte de façon certaine.

Bien entendu, on a cherché à réduire le plus possible les frottements, et notamment ceux des courroies sans fin, à l'intérieur de l'élément de pesage afin de réduire la puissance nécessaire et, par conséquent, de diminuer le poids du groupe motoréducteur. Malgré les efforts faits dans ce sens, le poids de ce groupe confère à l'élément de pesage un poids relativement élevé dont l'inertie n'est pas favorable à une pesée précise et rapide.

En définitive, l'élément de pesage classique permet d'effectuer les pesées à la précision voulue mais il constitue en même temps sur les chaînes de préemballage l'organe qui limite la cadence de travail sur ces chaînes.

L'invention a pour but principal de parvenir à un élément de pesage pour chaîne de préemballage qui rende possible une cadence de travail plus élevée par suite de l'élimination de la nécessité d'arrêter la marche de cet élément au cours de l'exécution d'une pesée, tout en conservant la précision exigée de chaque pesée, quel que soit le poids des articles dans une gamme pouvant aller de 100 g à 10 kg environ. En d'autres termes, le but principal de l'invention est de parvenir à un élément de pesage transporteur, incorporé à une chaîne de préemballage, qui permet le pesage à la volée, ou en continu, sans interruption du déplacement des articles individuels pesés.

A partir d'un élément de pesage pour transporteur d'une chaîne de préemballage, comprenant un châssis destiné à reposer sur un plateau d'une balance, et deux cylindres espacés entraînant plusieurs bandes sans fin ainsi qu'un groupe motoréducteur fixé sur un bâti porteur fixe et accouplé en rotation avec le cylindre, selon l'invention le bâti porteur est distinct de l'élément de pesage et accouplé au cylindre par l'intermédiaire d'un arbre allongé muni à ses extrémités opposées de joints d'accouplement flottant.

De préférence, l'arbre allongé a une longueur sensiblement égale à celle du cylindre; avantageusement le groupe motoréducteur est supporté par le bâti à proximité d'une première extrémité du cylindre et ce dernier est accouplé à l'arbre allongé par sa seconde extrémité opposée, l'arbre s'étendant ainsi en grande partie à l'intérieur de ce cylindre.

Dans un mode préféré de réalisation de l'invention, le châssis et le bâti porteur sont réunis l'un à l'autre par des moyens autorisant les mouvements verticaux de l'élément de pesage et interdisant ses mouvements longitudinaux et transversaux.

De préférence, le châssis comprend au moins deux traverses s'étendant dans l'intervalle entre les cylindres et entre les bandes sans fin, et une plaque de soutien est fixée à ces traverses afin de soutenir le brin supérieur de ces bandes sans fin.

On donner a maintenant une description d'un exemple de réalisation d'un élément de pesage conforme à l'invention. On se reportera au dessin annexé dans lequel:

— la figure 1 est une vue d'ensemble en élévation d'un élément de pesage selon l'invention,

— la figure 2 est une vue de dessus de l'élément de pesage de la figure 1,

— la figure 3 est une vue partielle agrandie en coupe selon III—III de la figure 1,

— la figure 4 est une vue de détail agrandie montrant un joint d'accouplement entre l'arbre allongé et un cylindre de l'élément de pesage,

— la figure 5 est une vue de détail agrandie montrant un moyen de liaison entre le châssis et le bâti porteur et montrant aussi une plaque de soutien des bandes sans fin.

Un élément de pesage désigné par la référence générale 1 est un transporteur de petite longueur qui est incorporé à une installation dans laquelle on trouve un transporteur amont 2 et un transporteur aval 3 dessinés en trait mixte. Des articles individuels, tels que des morceaux de viande placés chacun dans une barquette et enveloppés d'une feuille transparente scellée, sont préparés en amont. Ils sont déplacés ensuite dans le sens indiqué par une flèche F pour arriver en aval à un poste d'emballage, ou à un poste d'expédition, ou à un poste de rangement selon le cas.

En passant sur l'élément 1, chaque article doit être pesé et muni d'une étiquette indiquant son poids, le prix unitaire, le prix du morceau préemballé. A cet effet, l'élément 1 comprend un châssis rigide 4 qui contient deux cylindres parallèles 5, 6 autour desquels passent plusieurs bandes sans fin 7 qui laissent entre elles et avec le châssis 4 des intervalles 8. Des pieds 4A s'étendent vers le bas à partir du châssis 4 et reposent sur le plateau P d'une balance électronique à imprimante B. De plus, le cylindre 5 est accouplé en rotation à un groupe motoréducteur 9 qui assure l'entraînement des bandes sans fin 7 et le déplacement des articles le long de l'élément de pesage 1 dans le sens de la flèche F.

Dans l'exemple préféré de réalisation de l'invention que l'on décrit ici, il existe un bâti porteur fixe 10 qui comprend des pieds 11 et une partie supérieure 12. Cette dernière est disposée de préférence entre le plateau P et le châssis 4. Dans la partie supérieure 12 sont ménagées ds ouvertures 13 à travers lesquelles passent les pieds 4A du châssis 4 qui reposent sur la balance B. Le bâti porteur 10 est lui-même posé sur un support, le même que celui de la balance B, par exemple. Ce bâti 10 ne sert pas à supporter l'élément de pesage 1 dans son ensemble. Il sert à supporter le groupe motoréducteur 9, en face et à proximité d'une première extrémité 5A du cyclindre 5, grâce à une extension latérale de la plaque 12 ou à un moyen équivalent. De cette façon le poids du groupe motoréducteur 9 est sans influence sur la balance B.

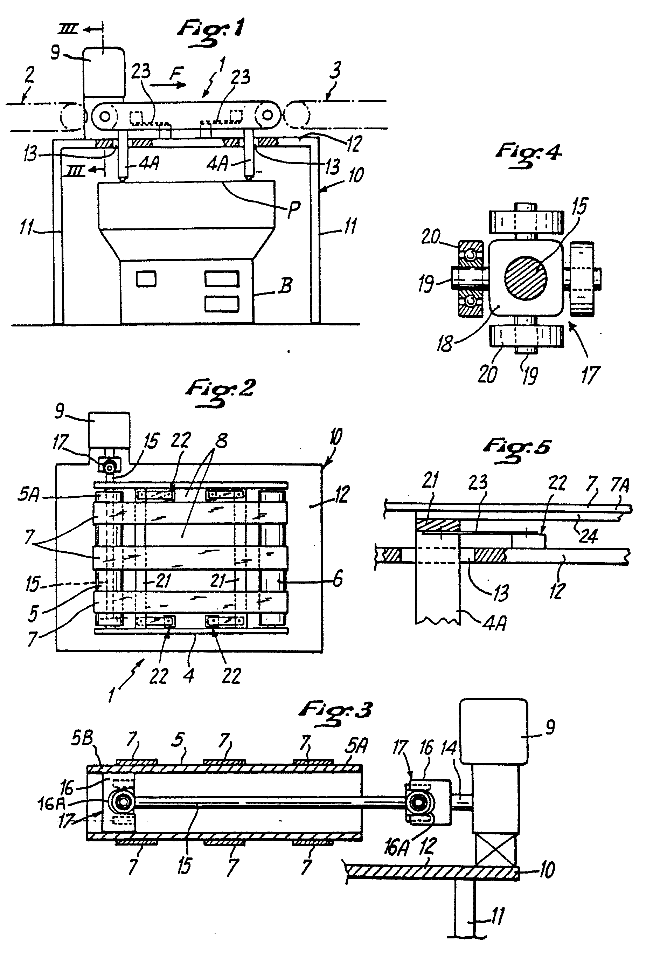

L'arbre 14 de sortie du groupe motoréducteur est accouplé en rotation avec le cylindre 5 à l'aide d'un arbre allongé 15 dont la longueur est sensiblement égale à celle de ce cylindre 5. De plus, il est accouplé à la seconde extrémité opposée 5B du cylindre 5. A cet effet, ce dernier est creux et il est pourvu intérieurement d'un croisillon d'accouplement 16. L'arbre 15 s'étend presque en totalité à l'intérieur du cyclindre 5 et il est muni à ses deux extrémités opposées d'un joint d'accouplement flottant 17, mieux visible sur la figure 4, du type joint universel. Chaque joint 17 assure la transmission d'un couple de rotation avec un très faible jeu tout en autorisant un débattement angulaire assez important de l'arbre 15 entre le cylindre 5 et l'arbre de sortie 14 du groupe motoréducteur 9. Plusieurs types connus de joints peuvent être employés pour donner ce résultat. Dans le présent exemple, l'arbre 15 est muni à ses deux extrémités d'un carré 18 dont chacune des faces porte un tourillon 19 sur lequel est monté un roulement à billes 20. A l'extrémité libre de l'arbre de sortie 14 du groupe 9 et à l'intérieur de la seconde extrémité 5B du cylindre 5 se trouve un croisillon 16 à quatre logements demi-cylindriques 16A, en croix, aptes à recevoir chacun environ une moitié de la bague extérieure d'un roulement à billes 20.

De cette façon, le châssis 4, les cylindres 5, 6, les bandes sans fin 7 et l'article à peser qui se trouve sur ces dernières peuvent suivre les déplacements verticaux du plateau P de la balance B sans subir d'efforts nuisibles dus à l'arbre allongé 15. La longueur de ce dernier tend à réduire l'importance de son inclinaison angulaire pour un même déplacement du plateau P. Les mouvements autorisés par les joints d'accouplement 17 se déterminent en fonction de l'amplitude maximale prévue en sens vertical du plateau P. La longueur de l'arbre allongé 15 est constante et la partie de son poids qui pèse sur la balance ne varie pas suffisament en fonction de son inclinaison pour que la précision des pesées en soit affectée. Le montage flottant de l'arbre 15 supprime aussi la transmission des vibrations du groupe motoréducteur 9 au plateau P de la balance.

De plus, avec une vitesse constante de rotation, même s'il se produit des frottements parasites dans les joints de transmission 17, leur influence est négligeable sur la précision des pesées.

De préférence, le châssis 4 de l'élément de pesée est pourvu de deux traverses espacées 21, parallèles aux cylindres 5, 6 et chacune d'elles est réunie à la plaque supérieure 12 du bâti porteur 10 à l'aide de deux moyens 22 autorisant un débattement en sens vertical seulement. Plusieurs moyens connus en soi peuvent être utilisés à cet effet, soit des couteaux à arête placée transversalement aux bandes sans fin 7, soit des lames élastiques horizontales 23 disposées dans le sens des bandes sans fin 7, comme dans le présent exemple, et fixées par leurs extrémités opposées d'une part au châssis 4 d'autre part au bâti porteur 10. Ainsi, on évite de reporter sur le plateau P les forces parasites qui peuvent résulter de l'inertie des articles qui circulent sur l'élément de pesée 1 dans le sens de la flèche F.

Avec un élément de pesage conforme à l'invention, il est possible de peser les articles en continu, pendant leur déplacement par les bandes sans fin 7.

Un avantage supplémentaire découle de l'invention. Puisque le groupe motoréducteur 9 est supporté par le bâti porteur fixe 10, il n'est plus nécessaire de chercher à minimiser le plus possible son poids, comme on le fait pour les éléments de pesage classique. On peut donc choisir un moteur puissant capable d'entraîner des articles lourds pesant jusqu'à 10 kg chacun. De plus, comme le montre la figure 5, ou peut fixer aux traverses 21 du châssis 4 une plaque de soutien 24 disposée juste en dessous du brin supérieur 7A des bandes sans fin 7. Quand elles portent un article lourd ces dernières reposent et glissent sur la plaque 24. Le moteur est assez puissant pour vaincre ce frottement supplémentaire et les moyens 22 de débattement vertical retiennent l'élément de pesage contre son entraînement dans le sens du déplacement sans entraver ses mouvements verticaux.

## Revendications

1. Elément de pesage pour transporteur d'une chaîne de préemballage comprenant un châssis (4) destiné à reposer sur un plateau (P) d'une balance (B), et deux cylindres espacés (5, 6) entraînant plusieurs bandes sans fin (7) ainsi qu'un groupe motoréducteur (9) fixé sur un bâti porteur (10) fixe et accouplé en rotation avec le cylindre (5), caractérisé en ce que le bâti porteur (10) est distinct de l'élément de pesage et accouplé au cylindre (5) par l'intermédiaire d'un arbre allongé (15) muni à ces extrémités opposées de joints d'accouplement flottant (17).

2. Elément de pesage selon la revendication 1 caractérisé en ce que l'arbre allongé (15) a une longueur sensiblement égale à celle du cylindre (5).

3. Elément de pesage selon la revendication 2 caractérisé en ce que le groupe motoréducteur (9) est supporté par le bâti porteur (10) à proximité d'une première extrémité (5A) du cylindre (5), l'arbre allongé (15) s'étend en grande partie à l'intérieur de ce cylindre (5) et il est accouplé à la seconde extrémité opposée (5B) dudit cylindre (5).

4. Elément de pesage selon la revendication 1 caractérisé en ce que le châssis (4) et le bâti porteur fixe (10) sont réunis par des moyens (22) autorisant seulement les mouvements verticaux du châssis (4), des cylindres (5, 6) et des bandes sans fin (7).

5. Elément de pesage selon la revendication 1 caractérisé en ce que le châssis (4) est pourvu de pieds (4A) pour reposer sur le plateau (P) de la balance (B), le bâti porteur fixe (10) ayant une partie supérieure (12) disposée entre l'élément de pesage (1) et le plateau (P) avec des ouvertures (13) pour le passage des pieds (4A).

6. Elément de pesage selon la revendication 5 caractérisé en ce que le châssis (4) est muni de deux traverses espacées (21) et les moyens (22) sont fixés d'une part à ces traverses (21), d'autre part à la partie supérieure (12) du bâti porteur (10).

7. Elément de pesage selon la revendication 1 caractérisé en ce que les joints d'accouplement flottant (17) comprennent chacun d'une part un carré (18) portant sur ses faces quatre pivots radiaux (19) supportant chacun un roulement à billes (20), d'autre part un croisillon (16) à quatre logements demi-cylindriques (16A) aptes à recevoir partiellement chacun un roulement à billes (20).

8. Elément de pesage selon la revendication 4 caractérisé en ce que chaque moyen (22) est constitué par un couteau à arête disposée transversalement aux bandes sans fin (7).

9. Elément de pesage selon la revendication 4 caractérisé en ce que chaque moyen (22) est constitué par une lame souple (23) disposée parallèlement aux bandes sans fin (7) et fixée par une extrémité au châssis (4) et par l'extrémité opposée au bâti porteur fixe (10).

10. Elément de pesage selon la revendication 6 caractérisé en ce qu'une plaque de soutien (24) est fixée aux traverses (21) en dessous du brin supérieur (7A) desbandes sans fin (7) pour soutenir celles-ci.

## Patentansprüche

1. Wägeelement für einen Förderer einer Vorverpackungskette, mit einem Gestell (4), das dazu dient, auf einen Plateau (P) einer Waage (B) zu ruhen, und mit zwei im Abstand voneinander liegenden Zylindern (5, 6), die mehrere Endlosbänder (7) antreiben, sowie einer Antriebsuntersetzungsgruppe (9), die an einem Tragrahmen (10) befestigt ist und in Antriebsverbindung mit dem Zylinder (5) steht, dadurch gekennzeichnet, dass der Tragrahmen (10) vom Wägeelement unterschieden ausgebildet ist und mit dem Zylinder (5) unter Zwischenschaltung einer länglichen Welle (15) verbunden ist, die an ihren gegenüberliegenden Enden schwimmende Kupplungsverbindungen (17) aufweist.

2. Wägeelement nach Anspruch 1, dadurch gekennzeichnet, dass die längliche Welle (15) eine Länge aufweist, die im wesentlichen gleich gross wie jene des Zylinders (5) ist.

3. Wägeelement nach Anspruch 2, dadurch gekennzeichnet, dass die Antriebsuntersetzungsgruppe (9) durch den Tragrahmen (10) in der Nachbarschaft eines ersten Endes (5A) des Zylinders (5) getragen wird, dass sich die längliche Welle (15) zum grossen Teil im Inneren des Zylinders (5) erstreckt und mit dem zweiten entgegengesetzten Ende (5B) des Zylinders (5) gekoppelt ist.

4. Wägeelement nach Anspruch 1, dadurch gekennzeichnet, dass das Gestell (4) und der stationäre Tragrahmen (10) durch Einrichtungen (22) verbunden sind, die lediglich vertikale Bewegungen des Gestells (4), der Zylinder (5, 6) und der Endlosbänder (7) gestatten.

5. Wägeelement nach Anspruch 1, dadurch gekennzeichnet, dass das Gestell (4) mit Füssen (4A) versehen ist, um auf dem Plateau (P) der Waage (B) zu ruhen, und dass der stationäre Tragrahmen (10) einen oberen Abschnitt (12) aufweist, der zwischen dem Wägeelement (1) und dem Plateau (P) liegt und öffnungen (13) für den Druchtritt der Füsse (4A) hat.

6. Wägeelement nach Anspruch 5, dadurch gekennzeichnet, dass das Gestell (4) mit zwei im Abstand voneinander liegenden Querträgern (21) ausgestattet ist und dass die Einrichtungen (22) einerseits an diesen Querträgern (21) und andererseits am oberen Abschnitt (12) des Tragrahmens (10) befestigt sind.

7. Wägeelement nach Anspruch 1, dadurch gekennzeichnet, dass jede der schwimmenden Kupplungsverbindungen (17) einerseits ein Viereck (18) aufweist, das auf seinen Seiten vier radiale Zapfen (19) trägt, von denen jeder ein Kugellager (20) trägt, und andererseits einen Kreuzzapfen (16) mit vier halbkreisförmigen Ausnehmungen (16A), die teilweise jedes Kugellager (20) aufnehmen können.

8. Wägeelement nach Anspruch 4, dadurch gekennzeichnet, dass jede Einrichtung (22) aus einer Halteschneide besteht, die quer zu den Endlosbändern (7) angeordnet ist.

9. Wägeelement nach Anspruch 4, dadurch gekennzeichnet, dass jede Einrichtung (22) aus einer biegsamen Klinge (23) besteht, die parallel zu den Endlosbändern (7) verläuft und über ein ende am Gestell (4) und über das entgegengesetzte Ende am stationären Tragrahmen (10) befestigt ist.

10. Wägeelement nach Anspruch 6, dadurch gekennzeichnet, dass eine Halteplatte (24) an den Querträgern (21) unterhalb des oberen Trums (7A) der Endlosbänder (7) befestigt ist, um diese zu halten.

**Claims**

1. A weighing element for a conveyor of a prepackaging line comprising a chassis (4) intended to rest on a plate (P) of a weighing machine (B), and two spaced cylinders (5, 6) driving a plurality of endless belts (7) and a motor-reducing unit (9) fixed on a fixed carrier structure (10) and coupled for rotary movement to the cylinder (5) characterised in that the carrier structure (10) is separate from the weighing element and is coupled to the cylinder (5) by way of an elongate shaft (15) provided at its opposite ends with floating coupling joints (17).

2. A weighing element according to claim 1 characterised in that the elongate shaft (15) is of a length which is substantially equal to that of the cylinder (5).

3. A weighing element according to claim 2 characterised in that the motor-reducing unit (9) is supported by the carrier structure (10) in the vicinity of a first end (5A) of the cylinder (5), the elongate shaft (15) extends over a large part thereof within said cylinder (5) and it is coupled to the second opposite end (5B) of said cylinder (5).

4. A weighing element according to claim 1 characterised in that the chassis (4) and the fixed carrier structure (10) are connected by means (22) permitting only vertical movements of the chassis (4), the cylinders (5, 6) and the endless belts (7).

5. A weighing element according to claim 1 characterised in that the chassis (4) is provided with legs (4A) for resting on the plate (P) of the weighing machine (B), the fixed carrier structure (10) having an upper part (12) disposed between the weighing element (1) and the plate (P) with openings (13) for the legs (4A) to pass therethrough.

6. A weighing element according to claim 5 characterised in that the chassis (4) is provided with two spaced transverse portions (21) and the means (22) are fixed on the one hand to said transverse portions (21) and on the other hand to the upper part (12) of the carrier structure (10).

7. A weighing element according to claim 1 characterised in that the floating coupling joints (17) each comprise on the one hand a square portion (18) bearing on its faces four radial pivots (19) each supporting a ball bearing assembly (20) and on the other hand a spider portion (16) with four semicylindrical housings (16A) which are each capable of partially receiving a ball bearing assembly (20).

8. A weighing element according to claim 4 characterised in that each means (22) is formed by a knife edge member with its knife edge disposed transversely to the endless belts (7).

9. A weighing element according to claim 4 characterised in that each means (22) is formed by a flexible blade (23) disposed parallel to the endless belts (7) and fixed by one end of the chassis (4) and by the opposite end to the fixed carrier structure (10).

10. A weighing element according to claim 6 characterised in that a support plate (24) is fixed to the transverse portions (21) below the top run (7A) of the endless belts (7) to support the latter.

*Fig. 1*

*Fig. 2*

*Fig. 3*

*Fig. 4*

*Fig. 5*